# EUROPÄISCHE PATENTSCHRIFT

(11) **EP 3 801 972 B1**
(45) Veröffentlichungstag und Bekanntmachung des Hinweises auf die Patenterteilung: **27.11.2024**
(21) Anmeldenummer: 19732922.0
(22) Anmeldetag: 07.06.2019
(51) Int. Cl.: B23K 20/12

(54) **KOPFSTÜCK, SCHWEISSWERKZEUG, SCHWEISSVORRICHTUNG UND SCHWEISSVERFAHREN DURCH RÜHRREIBSCHWEISSEN**
HEAD PIECE, WELDING TOOL, WELDING DEVICE, AND WELDING METHOD FOR FRICTION STIR WELDING
PIÈCE DE TÊTE, OUTIL DE SOUDAGE, DISPOSITIF DE SOUDAGE, ET PROCÉDÉ DE SOUDAGE POUR LE SOUDAGE PAR FRICTION MALAXAGE

(30) Priorität: 08.06.2018 DE 102018113680
(43) Veröffentlichungstag der Anmeldung: 14.04.2021
(73) Patentinhaber: KUKA Deutschland GmbH, 86165 Augsburg (DE)
(72) Erfinder: RICHTER, Bernd, 86343 Königsbrunn (DE); FRÖHLKE, Stefan, 86199 Augsburg (DE); GAO, Junhua, 86159 Augsburg (DE); HABERSETZER, Stefan, 86316 Rinnenthal (DE)
(74) Vertreter: Ernicke, Klaus Stefan
(86) Internationale Anmeldenummer: PCT/EP2019/064924
(87) Internationale Veröffentlichungsnummer: WO 2019/234212

(56) Entgegenhaltungen:
- CN-A- 105 598 575
- JP-A- 2016 123 984
- JP-B2- 3 290 608
- US-A1- 2012 193 401
- US-A1- 2014 203 067
- US-A1- 2016 263 696

## Beschreibung

Die Erfindung betrifft ein Kopfstück, ein Schweißwerkzeug, eine Schweißvorrichtung, und ein Schweißverfahren zum Rührreibschweißen mit den Merkmalen in den selbstständigen Verfahrens- und Vorrichtungsansprüchen, siehe Ansprüche 1, 5, 11 und 12.

Das Rührreibschweißen wird auch als friction-stir-welding (abgekürzt FSW) bezeichnet. Nachfolgend wird die Abkürzung FSW für das Rührreibschweißen benutzt.

Die US 2014/203 067 A1 zeigt ein Kopfstück mit den Merkmalen im Oberbegriff von Anspruch 1. Zwischen unterschiedlich hohen Stirnseiten des Kopfstücks ist ein schräger Wandübergang angeordnet, der sich quer zur Schweißvorschubrichtung erstreckt.

Die JP 2016-123984 A betrifft ein Kopfstück, ein Schweißwerkzeug und ein Schweißverfahren zum Rührreibschweißen von Kehlnähten. Das Kopfstück umfasst konisch zulaufende und einander schneidende sowie mittensymmetrisch ausgebildete Seitenwände, die eine in Schweißvorschubrichtung weisende Anschrägung zur Vermeidung von Klemmungen in der Kehlnaht beim Vorschub aufweisen.

Die US 2016/0263696 A1 und US 2012/0193401 A1 zeigen jeweils ein ähnliches Kopfstück, Schweißwerkzeug und Schweißverfahren zum Rührreibschweißen von Kehlnähten.

Es ist Aufgabe der vorliegenden Erfindung, eine verbesserte Schweißtechnik zum Rührreibschweißen, sogenannte FSW-Technik, aufzuzeigen.

Die Erfindung löst diese Aufgabe in den Merkmalen der selbstständigen Verfahrens- und Vorrichtungsansprüche.

Die beanspruchte Schweißtechnik zum Rührreibschweißen, sogenannte FSW-Technik, d.h. das Kopfstück, das Schweißwerkzeug und das Schweißverfahren sowie das hiermit hergestellte Schweißteil, haben verschiedene Vorteile. Mit der Schweißtechnik werden Werkstücke mit einem Höhenunterschied am Schweißstoß, z.B. aufeinanderliegende Werkstücke mit einem Überlappstoß oder unterschiedlich dicke Werkstücke mit einem Stumpfstoß, besser und zuverlässiger als bisher FSWgeschweißt.

Die Qualität und Festigkeit der Schweißverbindung kann verbessert werden. Zudem lassen sich mit einem z.B. schrägen Schweiß-Übergangsbereich Spalte zwischen den Werkstücken dicht verschließen. Dies ist besonders vorteilhaft bei einem Überlappstoß mit aufeinanderliegenden Werkstücken. Der dichte Spaltverschluss verhindert Spaltkorrosion oder andere korrosive oder sonstige ungünstige Umwelteinflüsse.

Besonders günstig ist es auch aufeinander liegende Werkstücke im Überlappstoß nahe an ihrem Werkstückrand zu schweißen. Der Schweiß-Übergangsbereich ist außerdem günstig für die Festigkeit des Schweißteils in einem solchen Randbereich und für eine vorteilhafte Gefügeausbildung. Ein solcher schräger Übergangsbereich ist zudem aus spannungstechnischen Gründen von Vorteil.

Gemäß der Erfindung ist ein Kopfstück für ein Schweißwerkzeug zum Rührreibschweißen, ein sog. FSW-Werkzeug, mit einer Durchgangsöffnung für ein plastifizierendes Schweißmittel, insbesondere einen rotierenden Schweißstift, vorgesehen, wobei das Kopfstück, eine im Schweißbetrieb zum Werkstück weisende profilierte Stirnseite mit unterschiedlich hohen Stirnseitenbereichen aufweist. Die stehen an der Stirnseite oder Stirnfläche unterschiedlich weit vor.

Eine schräge Schulter verbindet diese unterschiedlich hohen Stirnseitenbereiche und kann beim Schweißprozess das vom Schweißmittel plastifizierte Material des Werkstücks leiten. Die schräge Schulter gleicht auch den Höhenunterschied der Stirnseitenbereiche aus. Sie ist bevorzugt quer zu einer Schweißvorschubrichtung ausgerichtet und hat dabei eine schräge Ausrichtung bzw. Neigung entsprechend dem besagten Höhenunterschied.

Die schräge Schulter ist im Bereich der Durchlassöffnung des Kopfstücks am besagten Stirnbereich und der dortigen Austrittsstelle der Durchgangsöffnung angeordnet. Die schräge Schulter ist in Schweißvorschubrichtung gesehen im rückwärtigen Bereich der Durchlassöffnung angeordnet.

Die schräge Schulter ist bogenförmig ausgebildet und umgibt die Durchlassöffnung an ihrem in Schweißvorschubrichtung gesehen hinteren Bereich halbringförmig oder halbkreisförmig. Die schräge Schulter kann dabei direkt an den Rand der Durchlassöffnung anschließen. Der Öffnungsrand kann dabei zugleich der Schulterrand sein.

Die schräge Schulter kann eine Schulterfläche, insbesondere Bogenfläche, aufweisen, welche eine Überhöhung hat. Die Schulterfläche bzw. Bogenfläche kann dabei von ihrem vorderen und der Durchlassöffnung zugewandten Rand ausgehend nach hinten abfallen. Durch die Überhöhung kann der vordere Schulterrand eine Art Räumkante bilden für die Beeinflussung und Leitung des plastifizierten Materials bei der Relativbewegung zwischen dem Kopfstück des Schweißwerkzeugs und den zu schweißenden Werkstücken.

In einer Ausgestaltung können die unterschiedlich hohen Stirnseitenbereiche des Kopfstücks von der Durchlassöffnung ausgehend sich in Schweißvorschubrichtung erstrecken. Sie können dabei auch eine ebene Oberfläche aufweisen. Die profilierte Stirnseite hat in einer Ausführungsform zwei unterschiedlich hohe Stirnseitenbereiche. Die Zahl der Stirnseitenbereiche kann auch größer als zwei sein. Der genannte Höhenunterschied der Stirnseitenbereiche bezieht sich auf die Normalenrichtung auf der Hauptebene der Stirnseite des Kopfstücks. Diese Richtung fällt mit der Achse der Durchgangsöffnung an der Austrittsstelle an der Stirnseite zusammen. Mit den unterschiedlich hohen Stirnseitenbereichen kann das Kopfstück auf den Werkstücken aufliegen oder eng benachbart sein. Dies ist besonders günstig, für die Werkstücke, die am Schweißstoß eine unterschiedliche Höhe aufweisen.

Zwischen den unterschiedlich hohen Stirnseitenbereichen wird eine gerade Stufe ausgebildet. Diese geht etwa mittig vom vorderen Rand der Durchlassöffnung aus und erstreckt sich in Schweißvorschubrichtung. Die gerade Stufe kann eine Führungskante für die Bewegung des Schweißwerkzeugs und seines Kopfstücks beim Schweißvorschub bilden. Dies erleichtert und verbessert die exakte Führung des Schweißwerkezugs beim Schweißprozess und verbessert die Schweißqualität. Das Schweißwerkzeug kann beim Schweißvorschub senkrecht zur Werkstückoberfläche ausgerichtet sein. Es kann auch alternativ in Schweißvorschubrichtung schräg ausgerichtet sein, wobei z.B. die Spitze des Schweißmittels voreilt.

Der Höhenunterschied der Stirnseitenbereiche bzw. die Höhe der geraden Stufe kann an einen Höhenunterschied von zu schweißenden Werkstücken angepasst sein. Die Werkstücke können dabei aufeinanderliegen und mit einem Überlappstoß geschweißt werden. Andererseits können unterschiedlich dicke Werkstücke stumpfgestoßen und in einem Stumpfstoß geschweißt werden. Die Anpassung kann in einer Übereinstimmung oder in einer Annäherung der Höhenunterschiede bestehen.

Das beanspruchte Kopfstück ist eine technisch und wirtschaftlich eigenständige Einheit. Es kann beim Schweißwerkzeug fest oder lösbar angeordnet sein. Das Kopfstück kann bei der Erstausrüstung des Schweißwerkzeugs vorhanden sein. Es kann bedarfsweise auch an einem Schweißwerkzeug nachgerüstet oder umgerüstet werden, z.B. im Austausch gegen ein anderen vorhandenes Kopfstück.

Das beanspruchte Schweißwerkzeug zum Rührreibschweißen, sog. FSW-Werkzeug, weist ein plastifizierendes Schweißmittel, insbesondere einen rotierenden Schweißstift und das beanspruchte Kopfstück mit einer Durchlassöffnung für das Schweißmittel auf.

In einer technischen Ausführung ist das Kopfstück drehfest am Schweißwerkzeug angeordnet. Bei einem FSW-Schweißwerkzeug dreht sich dann der Schweißstift im Kopfstück und kann ggf. auch axial beweglich angeordnet sein.

Das Schweißwerkzeug kann ansonsten weitere erforderliche Komponenten, z.B. einen Antrieb für einen rotierenden Schweißstift oder ein anderes plastifizierendes Schweißmittel, eine Halterung für das plastifizierende Schweißmittel, insbesondere den rotierenden Schweißstift sowie einen Anschluss für eine Handhabungseinrichtung aufweisen.

Die Handhabungseinrichtung kann bevorzugt ein mehrachsiger und insbesondere taktiler Industrieroboter sein. Ein solcher Industrieroboter hat vorzugsweise vier, fünf oder mehr steuerbar angetriebene Roboterachsen. Der taktile Industrieroboter weist eine zugeordnete Sensorik für die Aufnahme von äußeren Belastungen auf. Dies kann eine zwischen Schweißwerkzeug und Abtriebselement der Handhabungseinrichtung, insbesondere des Industrieroboters, angeordnete Sensorik sein. In einer vorteilhaften Ausführungsform weist der taktile Industrieroboter eine integrierte Sensorik auf. Diese kann belastungsaufnehmende Sensoren an den Roboterachsen aufweisen. Dies können insbesondere Kraft- oder Momentensensoren sein. Außerdem können Wegsensoren oder weitere anderen Sensoren an den Roboterachsen angeordnet sein. Eine Schweißvorrichtung, bestehend aus dem beanspruchten Schweißwerkzeug und einer Handhabungseinrichtung, in Form des besagten mehrachsigen und taktilen Industrieroboters ist ebenfalls Gegenstand der Erfindung.

Das Kopfstück kann wechselbar am Schweißwerkzeug angeordnet sein. Es kann dabei als Adapter für unterschiedliche zu schweißende Werkstücke mit einem wechselnden Höhenunterschied ausgebildet sein. Das Kopfstück kann in geeigneter Weise lösbar am Schweißwerkzeug befestigt werden, z.B. durch eine Schraub- oder Bajonettverbindung. Günstig ist eine Verbindungstechnik, die eine exakte rotatorische Ausrichtung des Kopfstücks gegenüber der vorgesehenen und ggf. programmierten Schweißvorschubrichtung ermöglicht. Das Schweißwerkzeug kann mit einem Bausatz von unterschiedlichen Kopfstücken bzw. Adaptern ausgerüstet sein. Es lässt sich dadurch schnell und einfach an unterschiedliche Werkstück- und Prozessbedingungen anpassen.

Ein Schweißteil aus Werkstücken, die mit dem beanspruchten Schweißverfahren, sog. FSW-Verfahren, geschweißt wurden, hat den besagten Vorteil, dass ein ursprünglich zwischen den zu schweißenden Werkstücken vorhandener Spalt von einem Schweiß-Übergangsbereich an der Schweißnaht dicht verschlossen werden kann. Der Schweiß-Übergangsbereich kann dabei eine bevorzugt schräge Ausbildung haben. Hierdurch kann die Sprungstelle oder Stufe zwischen den im Überlappstoß aufeinander liegenden Werkstücken oder den im Stumpfstoß aneinanderstoßenden Werkstücken von der Schweißnaht ausgefüllt werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1 und 2:: ein Kopfstück für ein Schweißwerkzeug in verschiedenen Seitenansichten;
- Figur 3:: einen Schnitt durch das Kopfstück gemäß Schnittlinie III-III von Figur 2;
- Figur 4:: eine andere Schnittansicht des Kopfstücks;
- Figur 5 und 6:: verschiedene perspektivische Ansichten des Kopfstücks und seiner Stirnseite;
- Figur 7 und 8:: eine Draufsicht und eine Seitenansicht des Kopfstücks;
- Figur 9:: einen anderen und vergrößerten Schnitt durch den oberen Kopfstückbereich an der Stirnseite und
- Figur 10:: einen geschweißten Überlappstoß zwischen aufeinanderliegenden Werkstücken mit einem schrägen Schweiß-Übergangsbereich.

Die Erfindung betrifft ein Kopfstück (3) für ein Schweißwerkzeug (1) zum Rührreibschweißen, ein sog. FSW-Werkzeug. Die Erfindung betrifft ferner dieses Schweißwerkzeug (1), sog. FSW-Werkzeug, und ein zugehöriges Schweißverfahren zum Rührreibschweißen, ein sog. FSW-Verfahren. Die Erfindung bezieht sich außerdem auf ein mit dem Verfahren hergestelltes Schweißteil.

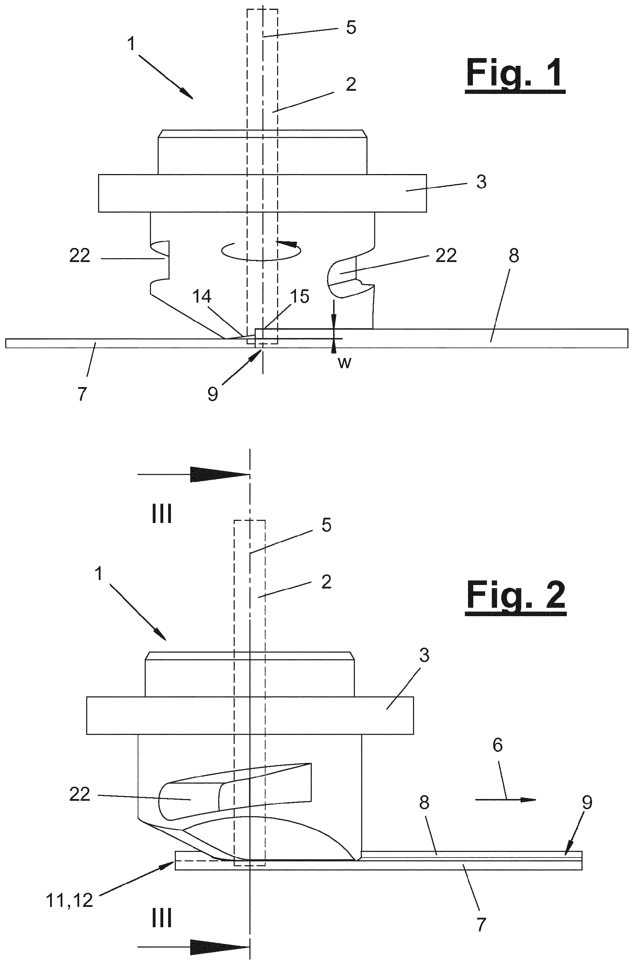

Figuren 1 bis 9 verdeutlichen das Kopfstück (3) in verschiedenen Ansichten. Das Kopfstück (3) kann ein lösbarer Bestandteil eines Schweißwerkzeugs (1) zum Rührreibschweißen, eines sog. FSW-Werkzeugs, sein. Das Schweißwerkzeug (1) ist in den Zeichnungen nur schematisch angedeutet.

Das Schweißwerkzeug (1) weist außer dem Kopfstück (3) ein das Werkstück (7,8) plastifizierendes Schweißmittel (2) sowie weitere Komponenten auf. In der gezeigten Ausführungsform für das Rührreibschweißen ist das Schweißmittel (2) ein schematisch dargestellter rotierender Schweißstift, der drehbar und ggf. auch in Axialrichtung verstellbar in einer geeigneten Halterung (nicht dargestellt) gelagert ist. Die besagten weiteren Komponenten können ein Drehantrieb und ggf. auch Zustellantrieb für das Schweißmittel (2), eine Steuerung und dgl. sein.

Das Schweißwerkzeug (1) kann von einer nicht dargestellten Handhabungseinrichtung in einer Schweißvorschubrichtung (6) relativ zu zwei oder mehr zu schweißenden Werkstücken (7,8) entlang einer Schweißbahn bewegt und geführt werden. Das Schweißwerkzeug (1) kann dabei relativ zu den ruhenden Werkstücken (7,8) bewegt werden. Alternativ ist eine kinematische Umkehr oder eine beiderseitige Relativbewegung möglich. Die Handhabungseinrichtung kann z. B. der vorgenannte mehrachsige und bevorzugt taktile Industrieroboter sein. Das Schweißwerkzeug (1) kann einen geeigneten Anschluss für die Befestigung an der Handhabungseinrichtung und ggf. auch für eine erforderliche Versorgung mit Betriebsmitteln aufweisen.

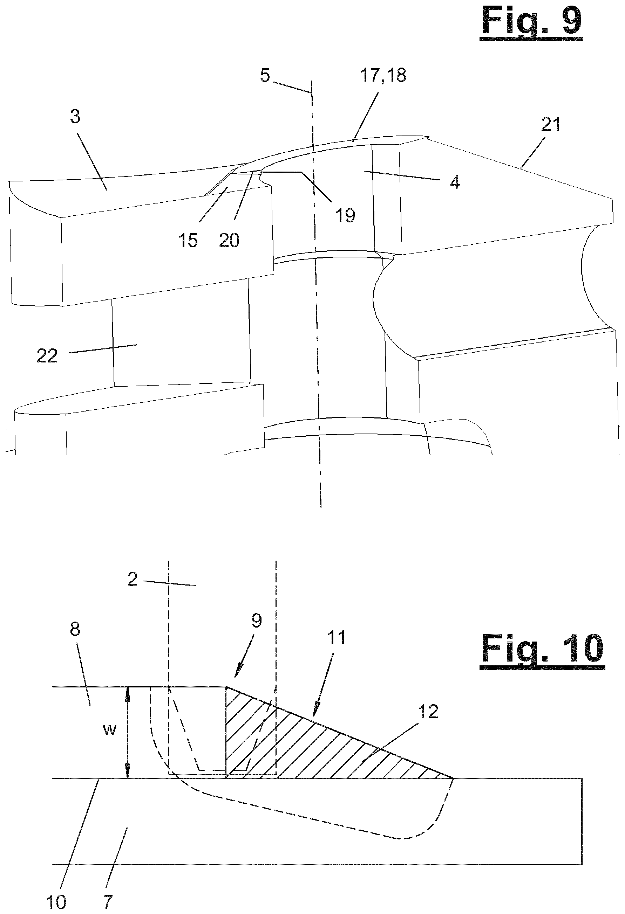

Die Werkstücke (7,8) können z.B. als metallische Bleche ausgebildet sein. Bei Figur 10 bilden sie z.B. Behälterflansche, die dicht und zumindest nach außen korrosionsfest verschweißt werden. Bei Figur 1 bis 3 sind z.B. tailor-welded-blanks gezeigt.

In den Zeichnungen sind verschiedene Schweißanordnungen von Werkstücken (7,8) und Schweißstöße (9) gezeigt. Figur 1 bis 3 zeigen einen Stumpfstoß zwischen den Stirnseiten von unterschiedlich dicken Werkstücken (7,8). In Figur 10 ist ein Überlappstoß von zwei aufeinander liegenden Werkstücken (7,8) dargestellt. In beiden Varianten entsteht eine Stufe zwischen dem dickeren oder oberen Werkstück (8) und dem dünneren oder unteren Werkstück (7) .

Das Schweißmittel (2) ist auf die Stoßstelle bzw. den Schweißstoß (9) der Werkstücke (7,8) gerichtet. Es beaufschlagt z.B. gemäß Figur 1 und 10 beide Werkstücke (7,8) an ihrem jeweiligen Rand. Hierbei kann z.B. eine ungleiche Werkzeugüberdeckung gegeben sein, wobei die Überdeckung am dickeren oder oberen Werkstück (8) größer ist.

Die Werkstücke (7,8) können aus gleichen oder unterschiedlichen Materialien, insbesondere Metallen, bestehen. Im gezeigten Beispiel bestehen sie z.B. jeweils aus einer Leichtmetalllegierung, z.B. Aluminiumlegierung. Alternativ sind unterschiedlich schmelzende bzw. plastifizierende Materialpaarungen, z.B. einer Leichtmetalllegierung und Stahl möglich.

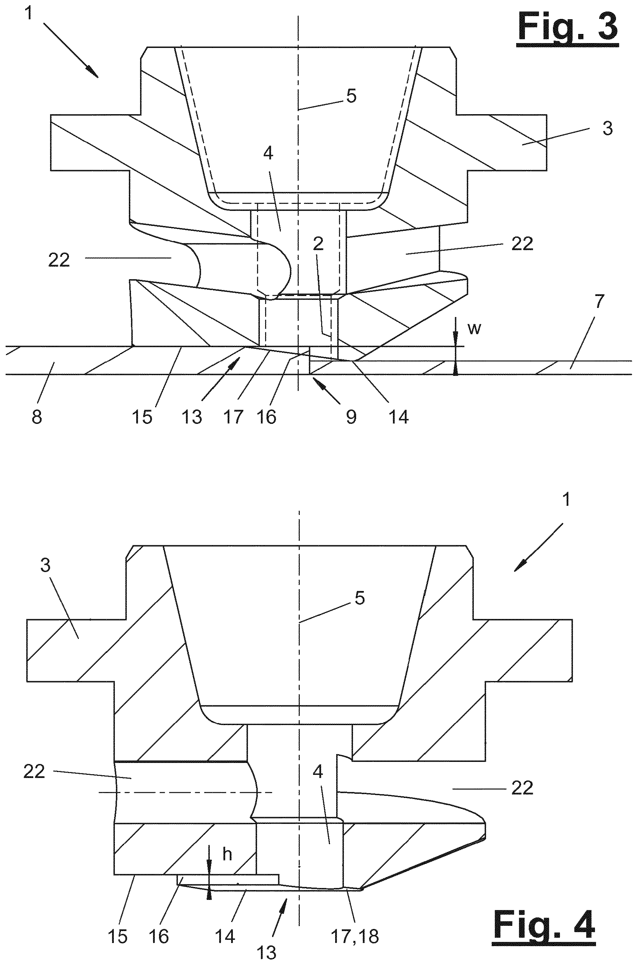

Das in den Zeichnungen dargestellte Kopfstück (3) weist eine bevorzugt zentrale Durchlassöffnung (4) für das Schweißmittel (2) und eine im Schweißbetrieb zu den Werkstücken (7,8) weisende Stirnseite (13) oder Stirnfläche auf. Die Durchlassöffnung (4) mündet an der Stirnseite (13). Das Kopfstück (3) kann z.B. die in den Schnittdarstellungen von Figur 3 und 4 gezeigte Hohlkörperform aufweisen und kann mittels einer Schraubverbindung, einer Steck- oder Bajonettverbindung oder in anderer geeigneter Weise mit einer Komponente des Schweißwerkzeugs (1) lösbar verbunden sein. Alternativ ist eine dauerhaft feste Verbindung möglich.

Das Schweißwerkzeug (1) und das Kopfstück (3) sind in den Zeichnungen senkrecht bzw. in Normalenrichtung zur Hauptebene oder Oberfläche der zu schweißenden Werkstücke (7,8) ausgerichtet. Desgleichen hat auch die Durchlassöffnung (4) mit ihrer zentralen Achse (5) diese Ausrichtung. Die Achse (5) kann auch die zentrale Achse des Kopfstücks (3) sein. Die Achse (5) ist senkrecht zur Schweißvorschubrichtung (6) ausgerichtet.

In Abwandlung der gezeigten Ausführungsform können das Schweißwerkzeug (1) und das Kopfstück (3) mit einer leichten Neigung gegen die Schweißvorschubrichtung (6) und mit einem sog. Einstechwinkel, von z.B. ca. 2° gegen die besagte Normalenrichtung, gegenüber den Werkstücken (7,8) ausgerichtet werden. Die an den Werkstücken (7,8) und am Schweißstoß (9) wirkende Spitze des Schweißmittels (2) kann dabei in Schweißvorschubrichtung (6) voreilen.

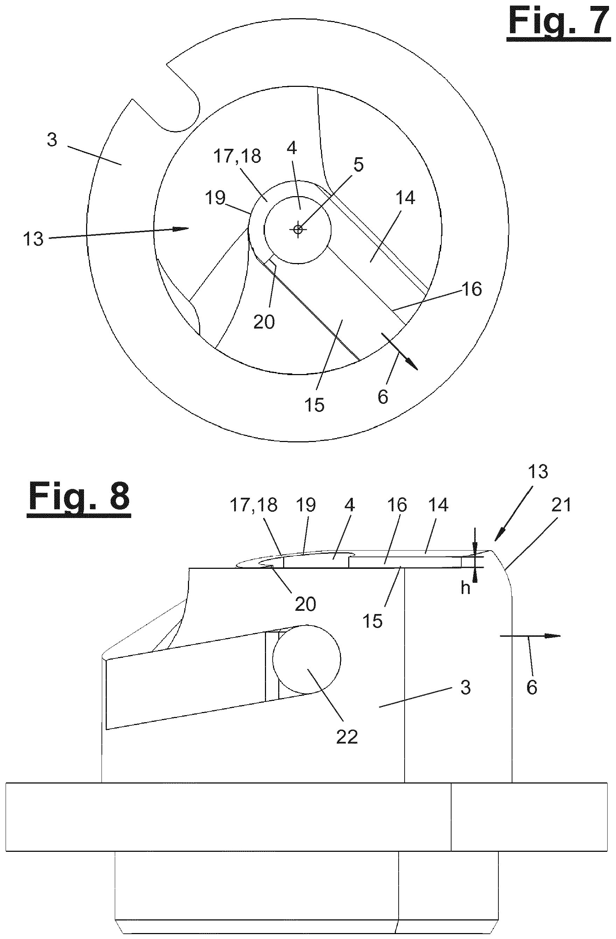

Das Kopfstück (3) weist eine profilierte Stirnseite (13) mit unterschiedlich hohen Stirnseitenbereichen (14,15) auf. Die Stirnseitenbereiche (14,15) ragen dabei von der Stirnseite (13) bzw. ihrer Hauptebene unterschiedlich weit vor. Die Stirnseitenbereiche (14,15) haben einen in Figur 3 und 8 gezeigten Höhenunterschied (h). Der Höhenunterschied (h) ist in Richtung der Achse (5) ausgerichtet.

Das Kopfstück (3) weist eine schräge Schulter (17) auf, welche die unterschiedlich hohen Stirnseitenbereiche (14,15) verbindet. Die Schulter (17) gleicht den Höhenunterschied aus und leitet das beim Schweißen plastifizierte Material des Werkstücks. Hierdurch kann an der Schweißnaht (11) ein in Figur 10 dargestellter Schweiß-Übergangsbereich zwischen den Werkstücken (7,8) gebildet werden.

Das Schweißmittel (2) beaufschlagt das dickere oder obere Werkstück (8) früher und ggf. stärker, wobei dessen Material vermehrt plastifiziert und verdrängt wird. Dabei wird die besagte Stufe zwischen den Werkstücken (7,8) von dem gelenkten plastifizierten Material und dem Schweiß-Übergangsbereich (12) ausgefüllt. Der Schweiß-Übergangsbereich (12) kann dabei eine schräge Erstreckung haben.

Bei einer anderen Variante eines Überlappstoßes mit bündig aufeinander liegenden Werkstücken (7,8) kann der Schweiß-Übergangsbereich in anderer Weise, z.B. kappenartig, ausgebildet sein.

Durch den Schweiß-Übergangsbereich (12) kann ein evtl. vorhandener Spalt (10) (vgl. Figur 10) zwischen den zu schweißenden Werkstücken (7,8) dicht verschlossen werden.

Wie Figuren 1 bis 9 verdeutlichen, ist die schräge Schulter (17) im Bereich der Durchlassöffnung (4) angeordnet. Sie befindet sich in Schweißvorschubrichtung (6) gesehen am rückwärtigen Bereich der Durchlassöffnung (4). Die schräge Schulter (17) ist bogenförmig ausgebildet und umgibt die Durchlassöffnung (4) an ihrem hinteren Bereich halbringförmig bzw. bei kreisrunder Durchlassöffnung (4) halbkreisförmig.

Die schräge Schulter (17) hat eine Oberfläche oder Bogenfläche (18). Deren Breite kann über den Bogenwinkel gleich bleiben. Die bogenförmige Schulter (17) schließt direkt in Schweißvorschubrichtung (6) gesehen rückseitig an die Durchlassöffnung (4) an, wobei der Rand (19) der Schulter (17) bzw. ihrer Bogenfläche (18) zugleich der Öffnungsrand ist.

Die Bogenfläche (18) kann eine Überhöhung aufweisen. Sie fällt dabei von ihrem vorderen Rand (19) ausgehend nach hinten ab. Der Rand (19) ist dabei das jeweils in Richtung der Achse (5) am weitesten vorstehende Teil der Bogenfläche (18).

In einer nicht dargestellten Abwandlung kann die schräge Schulter (17) zum einen entgegen der Schweißvorschubrichtung (6) von der Durchlassöffnung (4) distanziert sein. Sie kann dabei ihre besagte schräge Anordnung bzw. Lage zum Leiten des plastfizierten Materials beibehalten.

Die unterschiedlich hohen Stirnseitenbereiche (14,15) gehen von der Durchlassöffnung (4) aus und erstrecken sich in Schweißvorschubrichtung (6). Sie haben vorzugsweise jeweils eine ebene Oberfläche. Figuren 4 bis 7 zeigen diese Ausbildung.

Der höhere Stirnseitenbereich (14) schließt in Höhe der Achse (5) bündig an das obere Ende der Schulter (17) bzw. Bogenfläche (18) an. An der unteren Anschlussstelle der Schulter (17) bzw. Bogenfläche (18) an den tieferen Stirnseitenbereich (14) kann ein Absatz (20) vorhanden sein.

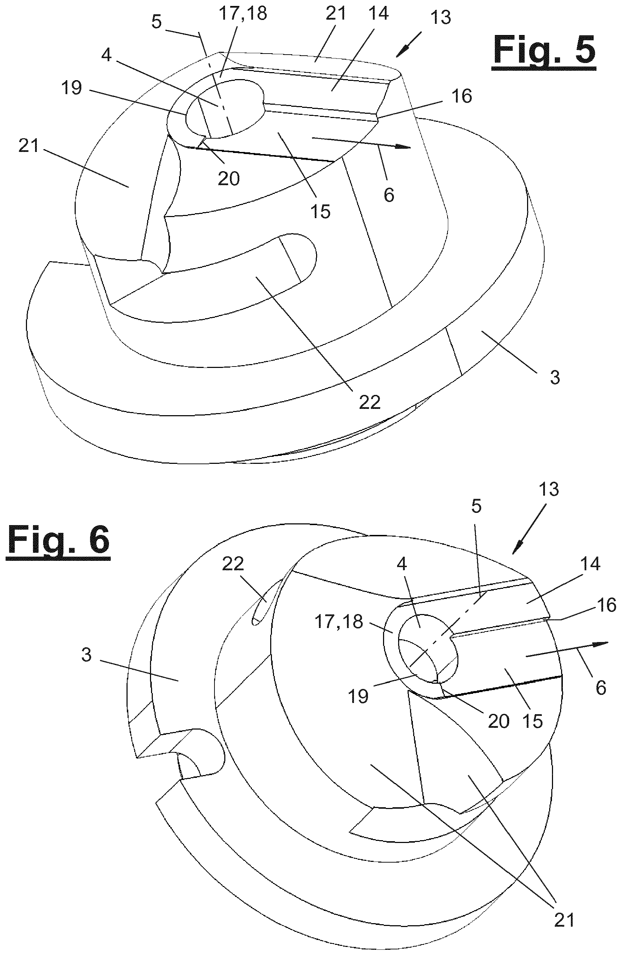

Zwischen den unterschiedlich hohen Stirnseitenbereichen (14,15) ist eine gerade Stufe (16) ausgebildet. Diese geht gemäß Figur 5 bis 6 etwa mittig vom vorderen Rand der Durchlassöffnung (4) aus und erstreckt sich in Schweißvorschubrichtung (6).

Die Oberflächen der Stirnseitenbereiche (14,15) können gemäß Figur 4, 5 und 9 quer zur Schweißvorschubrichtung (6) gesehen schräg zueinander ausgerichtet sein. Die Schrägen können dabei z.B. jeweils zur Stufe (16) hin abfallen. Es ist auch möglich, die Oberfläche des tieferen Stirnseitenbereichs (15) rechtwinklig zur Normalenrichtung bzw. zur Achse (5) auszurichten und die Oberfläche des höheren Stirnseitenbereichs (14) in der besagten Weise zu neigen. Die Oberflächen können auch parallel zueinander ausgerichtet sein.

Das Kopfstück (3) kann an der Oberseite schräg abfallende Freischnitte (21) aufweisen. Hierdurch können die vorrangig mit den Werkstücken (7,8) zusammenwirkenden Stirnseitenbereiche (14,15) und die schräge Schulter (17) freigestellt und Zwängungen beim Schweißvorschub vermieden werden. Das Kopfstück (3) kann am vorderen und den Werkstücken (7,8) zugewandten Bereich einen bevorzugt zylindrischen Korpus aufweisen. Die Stirnseitenbereiche (14,15) enden in Schweißvorschubrichtung (6) am Korpusrand.

Der besagte Höhenunterschied (h) der Stirnseitenbereiche (14,15) ist an der Stufe (16) ausgebildet. Die Stufenwandung erstreckt sich z.B. senkrecht zu den Oberflächen der Stirnseitenbereiche (14,15) und kann parallel zur Achse (5) verlaufen.

Der Höhenunterschied (h) der Stirnseitenbereiche (14,15) kann an einen Höhenunterschied (w) an den zu schweißenden Werkstücken (7,8) angepasst sein. Dieser Höhenunterschied (w) kann gemäß Figur 1 und 3 an unterschiedlich dicken Werkstücken (7,8) bei einem Stumpfstoß vorhanden sein. Er kann andererseits gemäß Figur 10 bei aufeinanderliegenden Werkstücken (7,8) an einem Überlappstoß vorhanden sein.

Bei der Anpassung kann der Höhenunterschied (h) gleich groß wie der Höhenunterschied (w) sein. Er kann alternativ an den Höhenunterschied (w) angenähert und etwas kleiner als dieser sein. Dies ist z.B. bei der vorerwähnten schrägen Ausrichtung des Schweißwerkzeugs (1) und seiner Achse (5) mit Einstechwinkel gegenüber den Werkstücken (7,8) der Fall. Hierdurch kann auch eine besser definierte Anlage des Kopfstücks (3) mit nur einem Stirnseitenbereich (14,15), insbesondere des tieferen Stirnseitenbereichs (15), am oberen bzw. höheren Werkstück (8) erreicht werden. Zudem kann ein Festlaufen in der Kehle zwischen den Werkstücken (7,8) verhindert werden.

Das Kopfstück (22) kann ferner eine oder mehrere vom Außenmantel nach innen zur Durchgangsöffnung (4) reichende Öffnungen (22) aufweisen. Sie können z.B. dem Auswurf von eingezogenem plastifiziertem Material aus der Durchgangsöffnung (4) dienen.

Die Öffnungen (22) können eine im Wesentlichen kreisrunde Mündung am Rand der Durchlassöffnung (4) aufweisen. An der Außenseite des Kopfstücks (3) bzw. seines Korpus kann die Mündung größer sein. Sie kann sich z.B. ein Stück weit über den Umfang des Korpus erstrecken. Das ist günstig für den rotierenden Auswurf. Die Ausrichtung kann dabei schräg zur Achse (5) bzw. schraubenabschnittsartig sein. Die Öffnungen (22) können beidseits am Kopfstück (3) vorhanden sein und können einander gegenüberliegend an der Durchgangsöffnung (4) münden.

Das Kopfstück (3) ist im gezeigten Ausführungsbeispiel drehfest am Schweißwerkzeug (1) angeordnet. Mittels Schraubverbindung, Bajonettverschluss oder dgl. kann das Kopfstück (3) wechselbar am Schweißwerkzeug (1) angeordnet sein. Das Kopfstück (3) kann als Adapter für unterschiedliche zu schweißende Werkstücke (7,8) mit einem wechselnden Höhenunterschied (w) ausgebildet sein. Die verschiedenen Kopfstücke (3) können dabei unterschiedlich große Höhenunterschiede (h) ihrer Stirnseitenbereiche (14,15) aufweisen.

Beim Schweißen kann das Schweißwerkzeug (1) mit dem Kopfstück (3) am Schweißstoß (9) in Schweißvorschubrichtung (6) entlang geführt werden. Die Stufe (16) zwischen den Stirnseitenbereichen (14,15) kann dabei als Führungskante dienen. Sie kann an die Stirnseite des dickeren Werkstücks (8) beim Stumpfstoß oder des oberen Werkstücks (8) beim Überlappstoß angedrückt werden. Der Führungskontakt kann von der Handhabungseinrichtung mit einer geeigneten Kraftmessung detektiert werden und zur Steuerung bzw. Regelung der Vorschubbewegung benutzt werden.

Das Schweißwerkzeug (1) kann zu Beginn des Schweißprozesses mit einer senkrechten oder schrägen Zustellbewegung an die zu schweißenden Werkstücke (7,8) von ihrer Oberseite her zugestellt werden. Mit dem z.B. rotierenden Schweißstift (2) kann dabei durch Plastifizierung des Werkstückmaterials ein Anfangsloch gebildet werden, wobei anschließend der Schweißvorschub (6) erfolgt. Bei der Zustellung kann das Kopfstück (3) in geeigneter Weise zur Schweißvorschubrichtung (6) und dem Schweißstoß (9) ausgerichtet werden. Das Kopfstück (3) kann dabei über das Schweißwerkzeug (1) mit der Handhabungseinrichtung drehfest gekoppelt werden und hat eine bekannte Drehzuordnung.

In den Zeichnungen ist das Schweißmittel (2) schematisch angedeutet. Es kann für ein FSW-Schweißwerkzeug als rotierender Schweißstift mit einer geeigneten und die Werkstückplastifizierung bewirkenden, z.B. konischen Spitze ausgebildet sein. Bei anderen Ausführungsformen kann das Schweißmittel (2) in anderer Weise ausgebildet sein und eine Plastifizierung der Werkstücke (7,8) an der Schweißstelle bewirken.

Abwandlungen der gezeigten Ausführungsformen sind in verschiedener Weise möglich. Die Zahl und Anordnung der unterschiedlich hohen Stirnseitenbereiche (14,15) kann variieren, insbesondere wenn mehr als zwei Werkstücke (7,8) verschweißt werden sollen.

### BEZUGSZEICHENLISTE

- 1: Schweißwerkzeug, FSW-Werkzeug
- 2: Schweißmittel, Schweißstift
- 3: Kopfstück, Adapter
- 4: Durchlassöffnung
- 5: Achse
- 6: Schweißvorschubrichtung
- 7: Werkstück
- 8: Werkstück
- 9: Schweißstoß, Überlappstoß, Stumpfstoß
- 10: Spalt
- 11: Schweißnaht
- 12: Schweiß-Übergangsbereich
- 13: Stirnseite
- 14: Stirnseitenbereich überstehend
- 15: Stirnseitenbereich abgesenkt
- 16: Stufe, Führungskante
- 17: schräge Schulter
- 18: Bogenfläche
- 19: Rand
- 20: Absatz
- 21: Freischnitt
- 22: Öffnung

- h: Höhenunterschied der Stirnseitenbereiche
- w: Höhenunterschied der Werkstücke

## Patentansprüche

1. Kopfstück für ein Schweißwerkzeug (1) zum Rührreibschweißen des Randbereichs von Werkstücken (7,8) mit einem Höhenunterschied (w) an einem Schweißstoß (9), insbesondere an einem Überlappstoß oder einem Stumpfstoß, wobei das Schweißwerkzeug (1) mit dem Kopfstück (3) am Schweißstoß (9) in einer Schweißvorschubrichtung (6) entlang führbar ist, wobei das Kopfstück (3) eine Durchlassöffnung (4) für ein plastifizierendes Schweißmittel (2), insbesondere einen rotierenden Schweißstift und eine im Schweißbetrieb zu den Werkstücken (7,8) weisende Stirnseite (13) aufweist, wobei das Kopfstück (3) eine profilierte Stirnseite (13) mit unterschiedlich hohen Stirnseitenbereichen (14,15) aufweist, die an der Stirnseite (13) mit einem Höhenunterschied (h) in Richtung einer Achse (5) der Durchlassöffnung (4) unterschiedlich weit vorstehen, wobei eine das plastifizierte Material der Werkstücke (7,8) leitende schräge Schulter (17) die unterschiedlich hohen Stirnseitenbereiche (14,15) verbindet **dadurch gekennzeichnet, dass** die schräge Schulter (17) im Bereich der Durchlassöffnung (4) in Schweißvorschubrichtung (6) gesehen am rückwärtigen Bereich der Durchlassöffnung (4), angeordnet ist, wobei die schräge Schulter (17) bogenförmig ausgebildet ist und die Durchlassöffnung (4) an ihrem rückwärtigen Bereich halbringförmig umgibt, wobei zwischen den unterschiedlich hohen Stirnseitenbereichen (14,15) eine gerade Stufe (16) ausgebildet ist, die etwa mittig vom vorderen Rand der Durchlassöffnung (4) in Schweißvorschubrichtung (6) ausgeht.

2. Kopfstück nach Anspruch 1, **dadurch gekennzeichnet, dass** die Bogenfläche (18) der schrägen Schulter (17) eine Überhöhung aufweist und von ihrem vorderen, der Durchlassöffnung (4) zugewandten Rand (19) ausgehend nach hinten abfällt.

3. Kopfstück nach Anspruch 1 oder 2, **dadurch gekennzeichnet, dass** die unterschiedlich hohen Stirnseitenbereiche (14,15) von der Durchlassöffnung (4) ausgehend sich in Schweißvorschubrichtung (6) erstrecken und bevorzugt eine ebene Oberfläche aufweisen.

4. Kopfstück nach einem der vorhergehenden Ansprüche, **dadurch gekennzeichnet, dass** der Höhenunterschied (h) der Stirnseitenbereiche (14,15) an den Höhenunterschied (w) der zu schweißenden Werkstücke (7,8) am Schweißstoß (9) angepasst ist.

5. Schweißwerkzeug zum Rührreibschweißen mit einem plastifizierenden Schweißmittel (2), insbesondere einem rotierenden Schweißstift, und mit einem Kopfstück (3) mit einer Durchlassöffnung (4) für das Schweißmittel (2), **dadurch gekennzeichnet, dass** das Kopfstück (3) nach einem der Ansprüche 1 bis 4 ausgebildet ist.

6. Schweißwerkzeug nach Anspruch 5, **dadurch gekennzeichnet, dass** das Kopfstück (3) drehfest am Schweißwerkzeug (1) angeordnet ist.

7. Anspruch 5 oder 6, das Kopfstück (3) wechselbar am Schweißwerkzeug (1) angeordnet und als Adapter für unterschiedliche zu schweißende Werkstücke (7,8) mit einem wechselnden Höhenunterschied (w) am Schweißstoß (9), insbesondere Überlappstoß, ausgebildet ist.

8. Schweißwerkzeug nach einem der Ansprüche 5 bis 7, **dadurch gekennzeichnet, dass** das Schweißwerkzeug (1) einen Antrieb für einen rotierenden Schweißstift (2) oder ein anderes plastifizierendes Schweißmittel aufweist.

9. Schweißwerkzeug nach einem der Ansprüche 5 bis 8, **dadurch gekennzeichnet, dass** das Schweißwerkzeug (1) eine Halterung für das plastifizierende Schweißmittel (2), insbesondere den rotierenden Schweißstift, aufweist.

10. Schweißwerkzeug nach einem der Ansprüche 5 bis 9, **dadurch gekennzeichnet, dass** das Schweißwerkzeug (1) einen Anschluss für eine Handhabungseinrichtung aufweist.

11. Schweißvorrichtung umfassend ein Schweißwerkzeug (1) und eine Handhabungseinrichtung in Form eines mehrachsigen und taktilen Industrieroboters, **dadurch gekennzeichnet, dass** das Schweißwerkzeug (1) nach einem der Ansprüche 5 bis 10 ausgebildet ist, wobei der taktile Industrieroboter vier, fünf oder mehr steuerbar angetriebene Roboterachsen und eine zugeordnete Sensorik für die Aufnahme von äußeren Belastungen aufweist.

12. Schweißverfahren zum Rührreibschweißen von Werkstücken (7,8) mit einem Schweißwerkzeug (1), das von einem mehrachsigen, bevorzugt taktilen Industrieroboter entlang einer Schweißbahn geführt wird, wobei Werkstücke (7,8) mit einem Höhenunterschied (w) an einem Schweißstoß (9), insbesondere an einem Überlappstoß oder einem Stumpfstoss, am Randbereich geschweißt werden und das Schweißwerkzeug (1) am Schweißstoß (9) in einer Schweißvorschubrichtung (6) entlang geführt wird, **dadurch gekennzeichnet, dass** das Schweißwerkzeug (1) nach einem der Ansprüche 5 bis 10 ausgebildet ist.

13. Schweißverfahren nach Anspruch 12, **dadurch gekennzeichnet, dass** beim Schweißen das plastifizierte Material mit einem Kopfstück (3) des Schweißwerkzeug (1) gelenkt wird, wobei an der Schweißnaht (11) ein bevorzugt schräger Schweiß-Übergangsbereich (12) zwischen den Werkstücken (7,8) gebildet wird.

14. Schweißverfahren nach Anspruch 12 oder 13, **dadurch gekennzeichnet, dass** beim Schweißen das Schweißwerkzeug (1) mit einer Stufe (16) des Kopfstücks (3) am Schweißstoß (9) entlang geführt wird, wobei ein Spalt (10) zwischen den Werkstücken (7,8) dicht verschlossen wird.

15. Schweißverfahren nach einem der Ansprüche 12 bis 14, **dadurch gekennzeichnet, dass** beim Schweißen das Kopfstück (3) mit den unterschiedlich hohen Stirnseitenbereichen (13,14) auf den Werkstücken (7,8) aufliegt oder eng benachbart ist.

## Claims

1. Head piece for a welding tool (1) for the friction stir welding of the edge region of workpieces (7, 8) with a height difference (w) at a weld joint (9), in particular at a lap joint or a butt joint, wherein the welding tool (1) with the head piece (3) can be guided along on the weld joint (9) in a welding feed direction (6), the head piece (3) having a passage opening (4) for a plasticizing welding means (2), in particular a rotating welding pin, and an end face (13) pointing towards the workpieces (7, 8) during welding operation, the head piece (3) having a profiled end face (13) with end-face regions (14, 15) which have different heights and protrude to different extents, in the direction of an axis (5) of the passage opening (4), from the end face (13) with a height difference (h), an oblique shoulder (17) which channels the plasticized material of the workpieces (7, 8) connecting the end-face regions (14, 15) of different heights, **characterized in that** the oblique shoulder (17) is arranged on the rear region of the passage opening (4) as seen in the welding feed direction (6) in the region of the passage opening (4), the oblique shoulder (17) having an arcuate form and surrounding, in the form of a half-ring, the rear region of the passage opening (4), a straight step (16) which proceeds approximately centrally from the front edge of the passage opening (4) in the welding feed direction (6) being formed between the end-face regions (14, 15) of different heights.

2. Head piece according to Claim 1, **characterized in that** the arcuate face (18) of the oblique shoulder (17) has a camber and slopes downwards from its front edge (19) facing towards the passage opening (4).

3. Head piece according to Claim 1 or 2, **characterized in that** the end-face regions (14, 15) of different heights extend in the welding feed direction (6) from the passage opening (4) and preferably have a flat surface.

4. Head piece according to one of the preceding claims, **characterized in that** the height difference (h) of the end-face regions (14, 15) is matched to the height difference (w) of the workpieces (7, 8) to be welded at the weld joint (9).

5. Welding tool for friction stir welding, comprising a plasticizing welding means (2), in particular a rotating welding pin, and comprising a head piece (3) with a passage opening (4) for the welding means (2), **characterized in that** the head piece (3) is designed according to one of Claims 1 to 4.

6. Welding tool according to Claim 5, **characterized in that** the head piece (3) is fastened to the welding tool (1) for conjoint rotation.

7. Welding tool according to Claim 5 or 6, **characterized in that** the head piece (3) is arranged interchangeably on the welding tool (1) and is in the form of an adapter for different workpieces (7, 8) to be welded that have a varying height difference (w) at the weld joint (9), in particular lap joint.

8. Welding tool according to one of Claims 5 to 7, **characterized in that** the welding tool (1) has a drive for a rotating welding pin (2) or another plasticizing welding means.

9. Welding tool according to one of Claims 5 to 8, **characterized in that** the welding tool (1) has a mount for the plasticizing welding means (2), in particular the rotating welding pin.

10. Welding tool according to one of Claims 5 to 9, **characterized in that** the welding tool (1) has a connection for a handling unit.

11. Welding device comprising a welding tool (1) and a handling unit in the form of a multi-axial and tactile industrial robot, **characterized in that** the welding tool (1) is designed according to one of Claims 5 to 10, the tactile industrial robot having four, five or more controllably driven robot axes and an associated sensor system for recording external loading.

12. Welding method for the friction stir welding of workpieces (7, 8) by means of a welding tool (1), which is guided along a welding path by a multi-axial, preferably tactile industrial robot, wherein workpieces (7, 8) with a height difference (w) at a weld joint (9), in particular at a lap joint or a butt joint, are welded at the edge region and the welding tool (1) is guided along on the weld joint (9) in a welding feed direction (6), **characterized in that** the welding tool (1) is designed according to one of Claims 5 to 10.

13. Welding method according to Claim 12, **characterized in that**, during the welding operation, the plasticized material is deflected by means of a head piece (3) of the welding tool (1), a preferably oblique welding transition region (12) between the workpieces (7, 8) being formed at the weld seam (11).

14. Welding method according to Claim 12 or 13, **characterized in that**, during the welding operation, the welding tool (1) is guided along on the weld joint (9) by way of a step (16) of the head piece (3), wherein a gap (10) between the workpieces (7, 8) is tightly closed.

15. Welding method according to one of Claims 12 to 14, **characterized in that**, during the welding operation, the head piece (3) rests on or is closely adjacent to the workpieces (7, 8) by way of the end-face regions (13, 14) of different heights.

## Revendications

1. Pièce de tête pour un outil de soudage (1) servant au soudage par friction malaxage de la région de bord de pièces (7, 8) présentant une différence de hauteur (w) au niveau d'un joint de soudure (9), en particulier au niveau d'un joint à recouvrement ou d'un joint abouté, l'outil de soudage (1) doté de la pièce de tête (3) pouvant être guidé le long du joint de soudure (9) dans une direction d'avance de soudage (6), la pièce de tête (3) présentant une ouverture traversante (4) pour un moyen de soudage plastifiant (2), en particulier une goupille de soudage rotative et un côté frontal (13) tourné vers les pièces (7, 8) lors du fonctionnement de soudage, la pièce de tête (3) présentant un côté frontal profilé (13) doté de régions de côté frontal (14, 15) de hauteurs différentes qui font saillie au niveau du côté frontal (13) dans une mesure différente avec une différence de hauteur (h) en direction d'un axe (5) de l'ouverture traversante (14), un épaulement incliné (17) dirigeant la matière plastifiée des pièces (7, 8) reliant les régions de côté frontal (14, 15) de hauteurs différentes, **caractérisée en ce que** l'épaulement incliné (17) est disposé dans la région de l'ouverture traversante (4) au niveau de la région arrière de l'ouverture traversante (4) vu dans la direction d'avance de soudage (6), l'épaulement incliné (17) étant réalisé en forme d'arc et entourant l'ouverture traversante (4) de manière semi-annulaire au niveau de sa région arrière, un gradin rectiligne (16) étant réalisé entre les régions de côté frontal (14, 15) de hauteurs différentes, lequel s'étend approximativement centralement à partir du bord avant de l'ouverture traversante (4) dans la direction d'avance de soudage (6).

2. Pièce de tête selon la revendication 1, **caractérisée en ce que** la surface arquée (18) de l'épaulement incliné (17) présente une élévation et descend vers l'arrière à partir de son bord (19) avant tourné vers l'ouverture traversante (4).

3. Pièce de tête selon la revendication 1 ou 2, **caractérisée en ce que** les régions de côté frontal (14, 15) de hauteurs différentes s'étendent dans la direction d'avance de soudage (6) à partir de l'ouverture traversante (4) et présentent de préférence une surface plane.

4. Pièce de tête selon l'une des revendications précédentes, **caractérisée en ce que** la différence de hauteur (h) des régions de côté frontal (14, 15) est adaptée à la différence de hauteur (w) des pièces (7, 8) à souder au niveau du joint de soudure (9).

5. Outil de soudage servant au soudage par friction malaxage comportant un moyen de soudage plastifiant (2), en particulier une goupille de soudage rotative, et comportant une pièce de tête (3) dotée d'une ouverture traversante (4) pour le moyen de soudage (2), **caractérisé en ce que** la pièce de tête (3) est réalisée selon l'une des revendications 1 à 4.

6. Outil de soudage selon la revendication 5, **caractérisé en ce que** la pièce de tête (3) est disposée de manière solidaire en rotation sur l'outil de soudage (1) .

7. Outil de soudage selon la revendication 5 ou 6, **caractérisé en ce que** la pièce de tête (3) est disposée de manière remplaçable sur l'outil de soudage (1) et est réalisée sous forme d'adaptateur pour différentes pièces (7, 8) à souder présentant une différence de hauteur (w) variable au niveau du joint de soudure (9), en particulier du joint à recouvrement.

8. Outil de soudage selon l'une des revendications 5 à 7, **caractérisé en ce que** l'outil de soudage (1) présente un entraînement pour une goupille de soudage rotative (2) ou un autre moyen de soudage plastifiant.

9. Outil de soudage selon l'une des revendications 5 à 8, **caractérisé en ce que** l'outil de soudage (1) présente un support pour le moyen de soudage plastifiant (2), en particulier la goupille de soudage rotative.

10. Outil de soudage selon l'une des revendications 5 à 9, **caractérisé en ce que** l'outil de soudage (1) présente un raccord pour un dispositif de manipulation.

11. Dispositif de soudage comprenant un outil de soudage (1) et un dispositif de manipulation sous la forme d'un robot industriel à plusieurs axes et tactile, **caractérisé en ce que** l'outil de soudage (1) est réalisé selon l'une des revendications 5 à 10, le robot industriel tactile présentant quatre, cinq ou plus de cinq axes de robot entraînés de manière à pouvoir être commandés et un système de capteurs associé pour l'enregistrement de charges externes.

12. Procédé de soudage servant au soudage par friction malaxage de pièces (7, 8) à l'aide d'un outil de soudage (1) qui est guidé le long d'un trajet de soudage par un robot industriel à plusieurs axes, de préférence tactile, des pièces (7, 8) présentant une différence de hauteur (w) au niveau d'un joint de soudure (9), en particulier au niveau d'un joint à recouvrement ou d'un joint abouté, étant soudées au niveau de la région de bord et l'outil de soudage (1) étant guidé le long du joint de soudure (9) dans une direction d'avance de soudage (6), **caractérisé en ce que** l'outil de soudage (1) est réalisé selon l'une des revendications 5 à 10.

13. Procédé de soudage selon la revendication 12, **caractérisé en ce que**, lors du soudage, la matière plastifiée est dirigée par une pièce de tête (3) de l'outil de soudage (1), une région de transition de soudure (12) de préférence inclinée étant formée entre les pièces (7, 8) au niveau du cordon de soudure (11).

14. Procédé de soudage selon la revendication 12 ou 13, **caractérisé en ce que**, lors du soudage, l'outil de soudage (1) est guidé le long du joint de soudure (9) par un gradin (16) de la pièce de tête (3), un espace (10) étant fermé hermétiquement entre les pièces (7, 8).

15. Procédé de soudage selon l'une des revendications 12 à 14, **caractérisé en ce que**, lors du soudage, la pièce de tête (3) repose sur les pièces (7, 8) ou est à proximité immédiate de celles-ci par les régions de côté frontal (13, 14) de hauteurs différentes.
